(19) **Europäisches Patentamt / European Patent Office / Office européen des brevets**

(11) **EP 3 944 712 A1**

(12) **EUROPEAN PATENT APPLICATION**
published in accordance with Art. 153(4) EPC

(43) Date of publication:
**26.01.2022  Bulletin 2022/04**

(21) Application number: **19923900.5**

(22) Date of filing: **10.04.2019**

(51) International Patent Classification (IPC):
**H04W 74/08** [(2009.01)]

(52) Cooperative Patent Classification (CPC):
**H04W 74/08**

(86) International application number:
**PCT/CN2019/082136**

(87) International publication number:
**WO 2020/206643 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **SHI, Cong**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **RANDOM ACCESS METHOD, DEVICE, AND STORAGE MEDIUM**

(57)     Disclosed is a random access method, comprising: a terminal device determining a random access type on the basis of at least one of the following: a selection parameter of a random access type, a signal strength parameter of a serving cell, and a resource configuration of an uplink bandwidth part. Further disclosed are another random access method, a terminal device, a network device, and a storage medium.

```
┌─────────────────┐                              ┌─────────────────┐
│ Terminal device │                              │ Network device  │
└─────────────────┘                              └─────────────────┘
         │              RACH type selection parameter        │
         │◄────────────────────────────────────────────────│
         │                                                   │
      ┌──┤ S301. The terminal device determines a RACH type  │
      │  │ based on at least one of a RACH type selection     │
      │  │ parameter, a signal strength parameter of a serving│
      └─►│ cell, or a resource configuration of a UL BWP      │
         │                                                   │
         │   S302. The terminal device executes a RACH        │
         │   process based on the determined RACH type        │
         │ - - - - - - - - - - - - - - - - - - - - - - - - ►  │
         │                                                   │
```

**FIG. 7**

**Description**

TECHNICAL FIELD

The disclosure relates to the technical field of wireless communication, and particularly to a method and device for Random Access Channel (RACH), and a storage medium.

BACKGROUND

In the related art, a terminal device establishes a wireless link with a network device by RACH. Therefore, how the terminal device performs the RACH to increase the success rate of RACH is a problem to be solved.

SUMMARY

In order to solve the foregoing technical problem, embodiments of the disclosure provide a RACH method, a device and a storage medium. The success rate of RACH may be increased when a terminal device implements RACH.
According to a first aspect, an embodiment of the disclosure provides a RACH method, which may include that: a terminal device determines a RACH type based on at least one of the following: a RACH type selection parameter, a signal strength parameter of a serving cell, or a resource configuration of an Uplink (UL) Bandwidth Part (BWP).
According to a second aspect, an embodiment of the disclosure provides a RACH method, which may include that: a network device sends a RACH type selection parameter, the RACH type selection parameter being used for a terminal device to determine a RACH type.
According to a third aspect, an embodiment of the disclosure provides a terminal device, which may include a processing unit, configured to determine a RACH type based on at least one of the following: a RACH type selection parameter, a signal strength parameter of a serving cell, or a resource configuration of a UL BWP.
According to a fourth aspect, an embodiment of the disclosure provides a network device, which may include a sending unit.
The sending unit may be configured to send a RACH type selection parameter, the RACH type selection parameter being used for a terminal device to determine a RACH type.
According to a fifth aspect, an embodiment of the disclosure provides a terminal device, which may include a processor and a memory configured to store a computer program capable of running in the processor. The processor may be configured to run the computer program to execute the steps of the RACH method executed by a terminal device.
According to a sixth aspect, an embodiment of the disclosure provides a network device, which may include a processor and a memory configured to store a computer program capable of running in the processor. The processor may be configured to run the computer program to execute the steps of the RACH method executed by a network device.
According to a seventh aspect, an embodiment of the disclosure provides a storage medium, storing an executable program which may be executed by a processor to implement the RACH method executed by a terminal device.
According to an eighth aspect, an embodiment of the disclosure provides a storage medium, storing an executable program which may be executed by a processor to implement the RACH method executed by a network device.
The RACH method provided in the embodiments of the disclosure includes that: the terminal device determines the RACH type based on the RACH type selection parameter, or based on the signal strength parameter of the serving cell and the RACH type selection parameter, or based on the resource configuration of the UL bandwidth path and the RACH type selection parameter, or based on the resource configuration of the UL BWP, the signal strength parameter of the serving cell and the RACH type selection parameter. Since the RACH type selection parameter is related to a payload of a RACH type, the terminal device may take a payload condition of a network as a reference factor when selecting the RACH type, the payload balancing of type-1 RACH and type-2 RACH is implemented, not only is the resource utilization rate optimized, but also the success rate of the RACH of the terminal device is increased.

BRIEF DESCRIPTION OF THEDRAWINGS

FIG. 1 is a process flowchart of type-2 RACH according to the disclosure.

FIG. 2 is a structure diagram of a Random Access Response (RAR) according to the disclosure.

FIG. 3A is a schematic format diagram of a subheader according to the disclosure.

FIG. 3B is another schematic format diagram of a subheader according to the disclosure.

FIG. 4 is a structure diagram of a Media Access Control Protocol Data Unit (MAC PDU) consisting of an RAR according to the disclosure.

FIG. 5 is a processing flowchart of type-1 RACH according to the disclosure.

FIG. 6 is a composition structure diagram of a communication system according to an embodiment of the disclosure.

FIG. 7 is an optional process flowchart of a RACH method according to an embodiment of the disclosure.

FIG. 8 is a composition structure diagram of a terminal device according to an embodiment of the disclosure.

FIG. 9 is a composition structure diagram of a network device according to an embodiment of the disclosure.

FIG. 10 is a hardware composition structure diagram of an electronic device according to an embodiment of the disclosure.

DETAILED DESCRIPTION

In order to make the characteristics and technical contents of the embodiments of the disclosure understood in more detail, the implementation of the embodiments of the disclosure will be described below in combination with the drawings in detail. The drawings are only adopted for description as references and not intended to limit the embodiments of the disclosure.

Before a RACH method provided in the embodiments of the disclosure is described in detail, type-1 RACH and type-2 RACH will be briefly described respectively at first.

In a New Radio (NR) system, RACH includes type-1 RACH and type-2 RACH. In type-1 RACH, a terminal device is required to perform information interaction twice with a network device. Therefore, type-1 RACH is also called 2-steps RACH. In type-2 RACH, a terminal device is required to perform information interaction for four times with a network device. Therefore, type-2 RACH is also called 4-steps RACH. According to different RACH manners, RACH includes contention-based RACH and contention-free RACH. According to different RACH types, RACH includes type-1 RACH and type-2 RACH. Type-1 RACH and type-2 RACH will be briefly described below respectively.

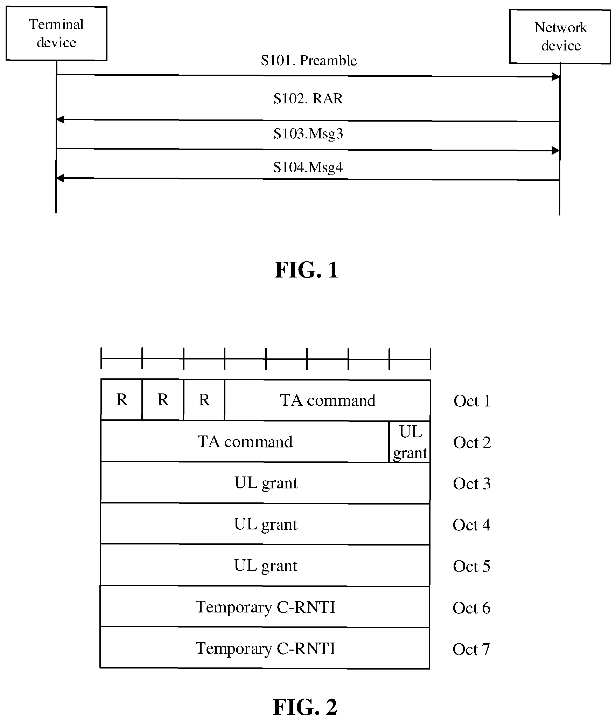

A process flow of type-2 RACH includes the following four operations, as shown in FIG. 1.

In S101, a terminal device sends a RACH preamble to a network device through Message 1 (Msg1).

The terminal device sends a selected preamble on a selected Physical RACH (PRACH) time-domain resource. The network device may estimate UL timing and a size of a UL grant needed by the transmission of Message 3 (Msg3) by the terminal device according to the preamble.

In S102, the network device, responsive to detecting that the terminal device sends the preamble, sends an RAR message to the terminal device through Message 2 (Msg2) to notify the terminal device of information about a UL resource available for sending Msg3, allocates a temporary Radio Network Temporary Identity (RNTI) to the terminal device and provides a Time Advance (TA) command for the terminal device, etc.

After sending Msg1, the terminal device enables an RAR window and detects a Physical Downlink Control Channel (PDCCH) in the RAR window. The detected PDCCH is scrambled with a Random Access-RNTI (RA-RNTI). A calculation formula for the RA-RNTI is as follows:

$$RA\text{-}RNTI = 1 + s\_id + 14 \times t\_id + 14 \times 80 \times f\_id + 14 \times 80 \times 8 \times ul\_carrier\_id.$$

It can be seen according to the formula that the RA-RNTI is related to a PRACH time-frequency resource.

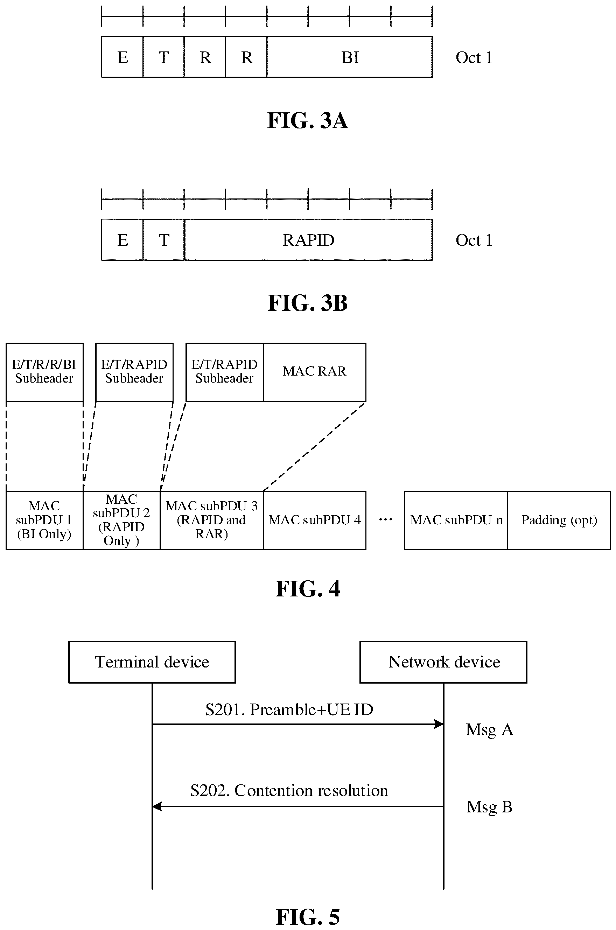

A structure diagram of an RAR is shown in FIG. 2. The RAR includes a subheader, a Random Access Preamble Identity (RAPID), a payload, a UL grant and a Temporary Cell-RNTI (TC-RNTI). A schematic format diagram of the subheader is shown in FIGS. 3A and 3B. BI (Backoff Index) is used to indicate fallback time for the retransmission of Msg1. A structure diagram of a MAC PDU consisting of an RAR is shown in FIG. 4. A RAP ID corresponds to a MAC RAR.

In S103, the terminal device sends Msg3 in a UL resource specified by the RAR message after receiving the RAR message.

Msg3 is mainly configured to notify the network device of an event triggering the RACH process. For example, a User Equipment (UE) Identifier (ID) and an establishment cause may be contained in Msg3 in case of an initial RACH event. A connected-state UE ID and an establishment cause may be contained in Msg3 in case of an RRC re-establishment event.

In addition, the ID contained in Msg3 may resolve a contention conflict in S104.

In S104, the network device sends Message 4 (Msg4) to the terminal device, Msg4 including a contention resolution message, and simultaneously allocates a UL transmission resource to the terminal device.

When receiving Msg4 sent by the network device, the terminal device may detect whether a UE-specific temporary ID sent by the terminal device through Msg3 is included in the contention resolution message sent by a base station. If YES, it indicates that the RACH process of the terminal device succeeds, otherwise it is determined that the RACH process fails and the terminal device is required to restart initiating the RACH process from the first operation.

Msg4 is also configured to send an RRC configuration message to the terminal device.

The contention conflict may be resolved in two manners. In a first manner, Msg4 is scheduled by a PDCCH scrambled with a Cell-RNTI (C-RNTI) if the terminal device contains the C-RNTI in Msg3. In a second manner, Msg4 is scheduled by a PDCCH scrambled with a TC-RNTI in case of initial access of the terminal device if the terminal device does not contain the C-RNTI in Msg3. The conflict is resolved by matching a Common Control Channel (CCCH) Service Data Unit (SDU) in a Physical Downlink Shared Channel (PDSCH) through which the terminal device receives Msg4.

Message contents in Msg1, Msg2, Msg3 and Msg4 in type-2 RACH are shown in Table 1.

Table 1

| | | Msg1 | Msg2 | Msg3 | Msg4 |
|---|---|---|---|---|---|
| Initial access | | Preamble | RAR-RNTI addressed PDCCH: PDSCH: BI (Optional); RAPID; TA; UL grant; Temporary C-RNTI; | UE ID (48 bits 5G-S-TMSI); Establishment cause (4 bits); | TC-RNTI addressed PDCCH; CCCH SDUs on PDSCH scheduled by the PDCCH; |
| RRC re-establishment | | | | ReestabUE-Identity: C-RNTI, PCI: (for old cell); short MAC I; ReestablishmentCause | C-RNTI addressed PDCCH; CCCH SDUs on PDSCH scheduled by the PDCCH; |
| Handover | | | | N/A | N/A |
| RRC resume | | | | Resume ID Short MAC I Resume Cause | C-RNTI addressed PDCCH; CCCH SDUs on PDSCH scheduled by the PDCCH; |
| SI request | | | RA-RNTI addressed PDCCH: RAR with RAPID only | N/A | N/A |
| BFR | | | C-RNTI addressed PDCCH | N/A | N/A |

The network device and the terminal device are required to perform information interaction for four times to complete the RACH process, and thus a delay of the RACH process is long. In order to solve the problem of long delay of the RACH process, type-1 RACH is proposed. As shown in FIG. 5, a process flow of type-1 RACH includes the following operations.

In S201, a terminal device sends Message A (MsgA) to a network device.

MsgA consists of a preamble and a payload. Optionally, the preamble is the same as that in type-2 RACH. The preamble is transmitted on a PRACH resource. Information contained in the payload is the same as that in Msg3 in type-2 RACH, e.g., RRC signaling when RRC is in an idle state and a C-RNTI when RRC is in a connected state. The payload may be transmitted through a Physical Uplink Shared Channel (PUSCH).

There may be the following two receiving results of MsgA by the network device. A first result is that the network device successfully decodes one or more preambles. A second result is that the network device successfully decodes one or more preambles and one or more payloads.

In S202, the terminal device receives Message B (MsgB) sent by the network device.

Optionally, MsgB includes contents in Msg2 and Msg4 in type-2 RACH.

For the condition that type-1 RACH and type-2 RACH coexist, a terminal device capable of executing type-1 RACH judges whether to select type-1 RACH or type-2 RACH based on received target power or RSRP of a serving cell. The terminal device selects type-1 RACH if the received target power is greater than a power threshold value or the RSRP of the serving cell is greater than an RSRP threshold value.

However, cell distribution is not considered in this solution. For example, when a large number of terminal devices capable of executing type-1 RACH are concentrated in the center of a cell, RSRP of the serving cell always satisfies the RSRP threshold for these terminal devices, and all these terminal devices select type-1 RACH. Consequently, type-1 RACH resources are overloaded, and more contention conflicts are caused. Furthermore, a RACH failure probability is higher, and a RACH delay is longer. Moreover, the higher RACH failure probability may cause the retransmission of more messages, which further worsens the situation that the RACH resources are overloaded. Therefore, there is yet no effective solution at present to the selection of a RACH type by a terminal device capable of executing 2-steps RACH with a payload balance of a network considered.

Based on the foregoing problem, the disclosure provides a RACH method. The RACH method of the embodiments of the disclosure may be applied to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system, or a 5th-Generation (5G) system.

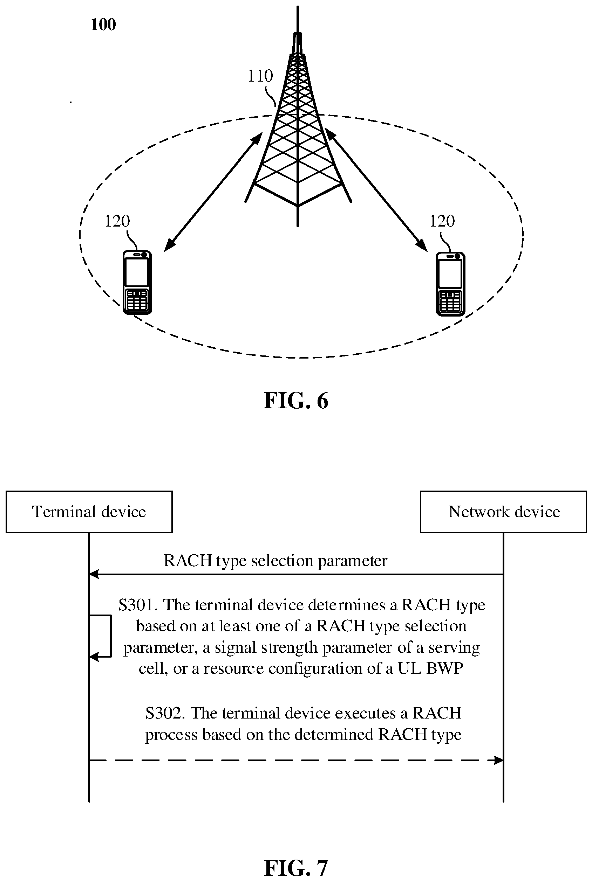

Exemplarily, FIG. 6 shows a communication system 100 that the embodiments of the application are applied to. The communication system 100 may include a network device 110. The network device 110 may be a device communicating with a terminal device 120 (or called a communication terminal and a terminal). The network device 110 may provide a communication coverage for a specific geographical region and communicate with a terminal device in the coverage. Optionally, the network device 110 may be a Base Transceiver Station (BTS) in the GSM or the CDMA system, or may be a NodeB (NB) in the WCDMA system, or may be an Evolutional Node B (eNB or eNodeB) in the LTE system, or may be a gNB in an NR.5G system or a wireless controller in a Cloud Radio Access Network (CRAN). Alternatively, the network device may be a mobile switching center, a relay station, an access point, a vehicle device, a wearable device, a hub, a switch, a network bridge, a router, a network-side device in a 5G network, a network device in a future evolved Public Land Mobile Network (PLMN), or the like.

The communication system 100 further includes at least one terminal device 120 within the coverage of the network device 110. As used herein, "terminal device" includes, but not limited to, a device arranged to receive/send a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another communication terminal, and/or an Internet of Things (IoT) device. The terminal device configured to communicate through a wireless interface may be called a "wireless communication terminal", a "wireless terminal", or a "mobile terminal." Examples of the mobile terminal include, but not limited to, a satellite or cellular telephone, a Personal Communication System (PCS) terminal capable of combining a cellular radio telephone and data processing, faxing and data communication capabilities, a Personal Digital Assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device, a user terminal, a terminal, a wireless communication device, a user agent, or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle device, a wearable device, a terminal device in the 5G network, a terminal device in the future evolved PLMN, or the like.

Optionally, the terminal devices 120 may perform Device to Device (D2D) communication with each other.

Optionally, the 5G system or the 5G network may also be called an NR system or an NR network.

FIG. 6 exemplarily shows one network device and two terminal devices. Optionally, the communication system 100 may include multiple network devices, and another number of terminal devices may be included in a coverage of each network device. No limits are made thereto in the embodiments of the application.

Optionally, the communication system 100 may further include another network entity such as a network controller and a mobility management entity. No limits are made thereto in the embodiments of the application.

It is to be understood that a device with a communication function in the network/system in the embodiments of the application may be called a communication device. For example, for the communication system 100 shown in FIG. 6, communication devices may include the network device 110 and terminal device 120 with the communication function, and the network device 110 and the terminal device 120 may be the specific devices as described above and will not be elaborated herein. The communication devices may further include other devices in the communication system 100, for example, other network entities like a network controller and a mobility management entity. No limits are made thereto in the embodiments of the application.

As shown in FIG. 7, an optional process flow of a RACH method provided in an embodiment of the disclosure includes the following operation.

In S301, a terminal device determines a RACH type based on at least one of the followings: a RACH type selection parameter, a signal strength parameter of a serving cell, or a resource configuration of a UL BWP.

In the embodiment of the disclosure, the terminal device is required to receive the RACH type selection parameter sent by a network device through a system message or RRC dedicated signaling at first before executing S301.

Descriptions will be made with an example that the terminal device determines the RACH type based on the RACH type selection parameter. The RACH type selection parameter includes a weight parameter of a RACH type or a parameter related to a payload of a RACH type. The RACH type selection parameter may be a weight parameter of present type-1 RACH and a weight parameter of present type-2 RACH. The RACH type selection parameter may also be the parameter related to the payload of the RACH type. Optionally, the parameter related to the payload of the RACH type is determined by the number X of terminal devices executing type-1 RACH in the serving cell and the number Y of terminals executing type-2 RACH in the serving cell. A value of a parameter related to a payload of type-1 RACH is equal to $Y/(X+Y)$. A value of a parameter related to a payload of type-2 RACH is equal to $X/(X+Y)$. The value of the parameter related to the payload of type-1 RACH is small if the payload of type-1 RACH is high, and vice versa.

When the terminal device determines the RACH type based on the RACH type selection parameter, the terminal device generates a random number at first and compares the random number with the RACH type selection parameter to select the RACH type. Optionally, the terminal device may generate a random number between 0 and 1 according to a uniform distribution. In some embodiments, the RACH type selection parameter is, for example, a first selection parameter corresponding to type-1 RACH. The terminal device determines that the RACH type is type-1 RACH under the condition that the random number is less than the first selection parameter. The terminal device determines that the RACH type is type-2 RACH under the condition that the random number is greater than or equal to the first selection parameter. When the first selection parameter corresponding to type-1 RACH is 0.5, the terminal device determines that the RACH type is type-1 RACH if the random number generated by the terminal device is 0.2, and determines that the RACH type is type-2 RACH if the random number generated by the terminal device is 0.6. In some other embodiments, the RACH type selection parameter is, for example, a second selection parameter corresponding to type-2 RACH. The terminal device determines that the RACH type is type-2 RACH under the condition that the random number is greater than the second selection parameter. The terminal device determines that the RACH type is type-1 RACH under the condition that the random number is less than or equal to the second selection parameter. When the second selection parameter corresponding to type-2 RACH is 0.6, the terminal device determines that the RACH type is type-1 RACH if the random number generated by the terminal device is 0.5, and determines that the RACH type is type-2 RACH if the random number generated by the terminal device is 0.7.

Optionally, the RACH type selection parameter is carried through the system broadcast message or the RRC dedicated signaling. When the RACH type selection parameter is carried through the system broadcast message, the network device broadcasts the RACH type selection parameter through a System Information Block (SIB) for terminal devices in an idle state, an inactive state and a connected state to use. When the RACH type selection parameter is carried through the RRC dedicated signaling, the RRC dedicated signaling may be an RRC connection establishment message, an RRC connection re-establishment message, an RRC connection resume message, an RRC connection reconfiguration message, or the like. The RRC dedicated signaling contains the RACH type selection parameter for a terminal device in a connected state to select the RACH type when triggering a RACH process. When the RACH type selection parameter is carried through the RRC dedicated signaling, the RRC dedicated signaling may also be an RRC connection release message, and the RRC connection release message contains the RACH type selection parameter for terminal devices in an idle state and an inactive state to select the RACH type.

In the embodiment of the disclosure, since the RACH type selection parameter is related to a payload of the RACH type, the terminal device may take a payload condition of a network as a reference factor when selecting the RACH type, and thus the payload balancing of type-1 RACH and type-2 RACH is implemented, not only is the resource utilization rate optimized, but also the success rate of the RACH of the terminal device is increased.

Descriptions will be made with an example that the terminal device determines the RACH type based on the signal strength parameter of the serving cell and the RACH type selection parameter. Optionally, the signal strength parameter of the serving cell is RSRP. The signal strength parameter of the serving cell may also be Reference Signal Received Quality (RSRQ), a Signal to Interference plus Noise Ratio (SINR), a TA value, or received target power of the terminal device. Alternatively, the signal strength parameter of the serving cell is another parameter capable of representing signal strength of the serving cell. The below takes the condition that the signal strength parameter of the serving cell is the RSRP as an example. The terminal device determines that the RACH type is type-2 RACH under the condition that the RSRP of the serving cell is less than or equal to a first threshold. The terminal device determines the RACH type based on the RACH type selection parameter under the condition that the RSRP of the serving cell is greater than the first threshold. Here, the operation that the terminal device determines the RACH type based on the RACH type selection parameter is the same as the implementation mode in the abovementioned embodiment, and will not be elaborated herein.

Then, the condition that the signal strength parameter of the serving cell is the received target power is taken as an example. The terminal device determines that the RACH type is type-2 RACH under the condition that the received target power is less than or equal to a first threshold. The terminal device determines the RACH type based on the RACH type selection parameter under the condition that the received target power is greater than the first threshold. Here, the operation that the terminal device determines the RACH type based on the RACH type selection parameter is the same as the implementation mode in the abovementioned embodiment, and will not be elaborated herein.

Then, the condition that the signal strength parameter of the serving cell is TA is taken as an example. The terminal device determines that the RACH type is type-1 RACH under the condition that the TA value is less than or equal to a first threshold. The terminal device determines the RACH type based on the RACH type selection parameter under the condition that the TA value is greater than the first threshold. Here, the operation that the terminal device determines the RACH type based on the RACH type selection parameter is the same as the implementation mode in the abovementioned embodiment, and will not be elaborated herein.

Descriptions will be made with an example that the terminal device determines the RACH type based on the signal strength parameter of the serving cell and the RACH type selection parameter. Optionally, the signal strength parameter of the serving cell is RSRP. The signal strength parameter of the serving cell may also be RSRQ, a SINR, a TA value, or received target power. Alternatively, the signal strength parameter of the serving cell is another parameter capable of representing signal strength of the serving cell. The below takes the condition that the signal strength parameter of the serving cell is the RSRP as an example. The terminal device determines that the RACH type is type-1 RACH under the condition that the RSRP of the serving cell is greater than or equal to a second threshold. In such case, it is determined that the terminal device is in the center of the serving cell and the TA value is relatively small or close to 0, which is favorable for the network device to correctly decode the payload of type-1 RACH. The terminal device determines that the RACH type is type-2 RACH under the condition that the RSRP of the serving cell is less than a third threshold. In such case, it is determined that the terminal device is at an edge of the serving cell and the TA value is relatively large, which is unfavorable for the network device to correctly decode the payload of type-1 RACH. Moreover, since a deviation of the TA value is relatively great, sending the payload of type-1 RACH may increase UL interferences of a system. Under the condition that the RSRP of the serving cell is greater than or equal to the third threshold and less than the second threshold, the terminal device determines the access type based on the RACH type selection parameter, or the terminal device randomly determines the RACH type. Here, the second threshold and the third threshold are values corresponding to the RSRP. The operation that the terminal device determines the RACH type based on the RACH type selection parameter is the same as the implementation mode in the abovementioned embodiment, and will not be elaborated herein. When determining the RACH type, the terminal device may randomly determine one of type-1 RACH and type-2 RACH with the same probability.

Then, the condition that the signal strength parameter of the serving cell is the received target power is taken as an example. The terminal device determines that the RACH type is type-1 RACH under the condition that the received target power is greater than or equal to a second threshold. In such case, it is determined that the terminal device is in the center of the serving cell and the TA value is relatively small or close to 0, which is favorable for the network device to correctly decode the payload of type-1 RACH. The terminal device determines that the RACH type is type-2 RACH under the condition that the received target power is less than a third threshold. In such case, it is determined that the terminal device is at an edge of the serving cell and the TA value is relatively large, which is unfavorable for the network device to correctly decode the payload of type-1 RACH. Moreover, since a deviation of the TA value is relatively great, sending the payload of type-1 RACH may increase UL interferences of a system. Under the condition that the received target power is greater than or equal to the third threshold and less than the second threshold, the terminal device determines the access type based on the RACH type selection parameter, or the terminal device randomly determines the RACH type. Here, the second threshold and the third threshold are values corresponding to the received target power. The operation that the terminal device determines the RACH type based on the RACH type selection parameter is the same as the implementation mode in the abovementioned embodiment, and will not be elaborated herein. When determining the RACH type, the terminal device may randomly determine one of type-1 RACH and type-2 RACH with the same probability. Alternatively, when determining the RACH type, the terminal device performs a modulus operation on 2 according to its own ID to determine that the RACH type is type-1 RACH or type-2 RACH. It is determined that the RACH type is type-1 RACH when a modulus result is 0. It is determined that the RACH type is type-2 RACH when the modulus result is 1. The ID may be a 5G System Architecture Evolution Temporary Mobile Subscriber Identity (S-TMSI) used in a connection establishment process, or may be an Inactive RNTI (I-RNTI) used in a connection resume process, or may be a short Message Authentication Code for Integrity (MAC-I) used in a connection re-establishment process.

Then, the condition that the signal strength parameter of the serving cell is TA is taken as an example. The terminal device determines that the RACH type is type-1 RACH under the condition that the TA value is less than or equal to a second threshold. In such case, it is determined that the terminal device is in the center of the serving cell, which is favorable for the network device to correctly decode the payload of type-1 RACH. The terminal device determines that the RACH type is type-2 RACH under the condition that the TA value is greater than a third threshold. In such case, it is determined that the terminal device is at an edge of the serving cell, which is unfavorable for the network device to correctly decode the payload of type-1 RACH. Moreover, since a deviation of the TA value is relatively great, sending the payload of type-1 RACH may increase UL interferences of a system. Under the condition that the TA value is greater than or equal to the second threshold and less than the third threshold, the terminal device determines the access type based on the RACH type selection parameter, or the terminal device randomly determines the RACH type. Here, the second threshold and the third threshold are values corresponding to the TA value. The operation that the terminal device determines the RACH type based on the RACH type selection parameter is the same as the implementation mode in the abovementioned embodiment, and will not be elaborated herein.

In the abovementioned embodiment of the disclosure, the first threshold, the second threshold and the third threshold may be carried through the system broadcast message or the RRC dedicated signaling. The terminal device, when selecting the RACH type, not only takes the signal strength parameter of the serving cell as a reference factor and may also take a payload condition of a network as a reference factor, the payload balancing of type-1 RACH and type-2 RACH is implemented, not only is the resource utilization rate optimized, but also the success rate of the RACH of the terminal device is increased.

Descriptions will be made with an example that the terminal device determines the RACH type based on the resource configuration of the UL BWP and the RACH type selection parameter. For a terminal device in a connected state, a type-1 RACH resource and/or a type-2 RACH resource may be configured in different UL BWPs. Therefore, the terminal device determines what RACH resources are configured in a present activated UL BWP when initiating the RACH. The terminal device determines that the RACH type is type-1 RACH under the condition that the type-1 RACH resource is configured in the present activated UL BWP. The terminal device determines that the RACH type is type-2 RACH under the condition that the type-2 RACH resource is configured in the present activated UL BWP. Under the condition that the type-1 RACH resource and the type-2 RACH resource are configured in the present activated UL BWP, the terminal device determines the RACH type based on the RACH type selection parameter and/or the signal strength parameter of the serving cell, or the terminal device randomly determines the RACH type. Here, an implementation process that the terminal device determines the RACH type based on the RACH type selection parameter and/or the signal strength parameter of the serving cell is the same as the implementation mode in each abovementioned embodiment, and will not be elaborated herein. When randomly determining the RACH type, the terminal device may randomly determine one of type-1 RACH and type-2 RACH with the same probability. Alternatively, when determining the RACH type, the terminal device performs a modulus operation on 2 according to its own ID to determine that the RACH type is type-1 RACH or type-2 RACH. It is determined that the RACH type is type-1 RACH when a modulus result is 0. It is determined that the RACH type is type-2 RACH when the modulus result is 1. The ID may be a 5G-S-TMSI used in a connection establishment process, or may be an I-RNTI used in a connection resume process, or may be a short MAC-I used in a connection re-establishment process. The terminal device determines the RACH type based on a resource configuration of an initial BWP under the condition that neither type-1 RACH resource nor type-2 RACH resource is configured in the present activated UL BWP. It can be understood that the terminal device falls back to the initial BWP and determines the RACH type according to a resource configured in the initial BWP under the condition that neither type-1 RACH resource nor type-2 RACH resource is configured in the present activated UL BWP. The terminal device determines that the RACH type is type-1 RACH if the resource configured in the initial BWP is a type-1 RACH resource. The terminal device determines that the RACH type is type-2 RACH if the resource configured in the initial BWP is a type-2 RACH resource.

In some embodiments, the method further includes the following operation after S301.

In S302, the terminal device executes a RACH process based on the determined RACH type.

During specific implementation, when the terminal device fails to execute the RACH process, the terminal device re-executes the RACH process based on the determined RACH type, or the terminal device re-determines the RACH type and executes the RACH process based on the re-determined RACH type.

When re-determining the RACH type, the terminal device may determine the RACH type according to the RACH method provided in S301.

It is to be noted that, in each abovementioned embodiment of the disclosure, the terminal device has a capability of executing type-1 RACH.

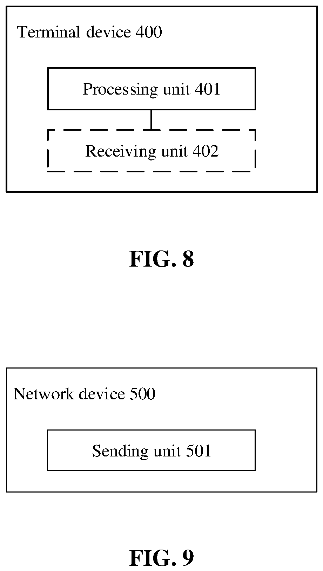

In order to implement the RACH method, an embodiment of the disclosure also provides a terminal device. FIG. 8 shows a composition structure of the terminal device. The terminal device 400 includes a processing unit 401.

The processing unit 401 is configured to determine a RACH type based on at least one of the following: a RACH type selection parameter, a signal strength parameter of a serving cell, or a resource configuration of a UL BWP.

In the embodiment of the disclosure, the terminal device further includes a receiving unit 402, configured to receive the RACH type selection parameter sent by a network device through a system broadcast message or RRC dedicated signaling.

In the embodiment of the disclosure, when the terminal device is in a connected state, the processing unit 401 is configured to:

under the condition that a type-1 RACH resource is configured in an activated UL BWP, determine that the RACH type is type-1 RACH;

under the condition that a type-2 RACH resource is configured in the activated UL BWP, determine that the RACH type is type-2 RACH;

under the condition that the type-1 RACH resource and the type-2 RACH resource are configured in the activated UL BWP, determine the RACH type based on the RACH type selection parameter and/or the signal strength parameter of the serving cell, or randomly determine the RACH type; and

under the condition that no type-1 RACH resource and type-2 RACH resource are configured in the activated UL BWP, determine the RACH type based on a resource configuration of an initial BWP.

In the embodiment of the disclosure, the processing unit 401 is configured to: determine that the RACH type is type-2 RACH under the condition that the signal strength parameter of the serving cell is less than or equal to a first threshold; and

under the condition that the signal strength parameter of the serving cell is greater than the first threshold, determine the RACH type based on the RACH type selection parameter.

In the embodiment of the disclosure, the processing unit 401 is configured to: determine that the RACH type is type-1 RACH under the condition that the signal strength parameter of the serving cell is greater than or equal to a second threshold;

under the condition that the signal strength parameter of the serving cell is less than a third threshold, determine that the RACH type is type-2 RACH; and

under the condition that the signal strength parameter of the serving cell is greater than or equal to the third threshold and less than the second threshold, determine the access type based on the RACH type selection parameter or randomly determine the RACH type.

In the abovementioned embodiment of the disclosure, the first threshold, the second threshold and the third threshold are carried through the system broadcast message or the RRC dedicated signaling.

In the embodiment of the disclosure, the processing unit 401 is configured to: generate a random number;

determine that the RACH type is type-1 RACH under the condition that the random number is less than a first selection parameter; and

determine that the RACH type is type-2 RACH under the condition that the random number is greater than or equal to the first selection parameter.

The first selection parameter is a selection parameter of type-1 RACH.

In the embodiment of the disclosure, the processing unit 401 is configured to: generate a random number;

determine that the RACH type is type-2 RACH under the condition that the random number is greater than a second selection parameter; and

determine that the RACH type is type-1 RACH under the condition that the random number is less than or equal to the second selection parameter.

The second selection parameter is a selection parameter of type-2 RACH.

In the embodiment of the disclosure, the RACH type selection parameter is carried through the system broadcast message or the RRC dedicated signaling. The RACH type selection parameter includes a weight parameter of the RACH type, or a parameter related to a payload of the RACH type. The signal strength parameter of the serving cell is RSRP.

In the embodiment of the disclosure, the processing unit 401 is further configured to execute a RACH process based on the determined RACH type.

In the embodiment of the disclosure, under the condition that the processing unit 401 fails to execute the RACH process, the processing unit 401 is further configured to re-execute the RACH process based on the determined RACH type.

Alternatively, the processing unit 401 is further configured to re-determine the RACH type and execute the RACH process based on the re-determined RACH type.

In the embodiment of the disclosure, the terminal device is capable of executing type-1 RACH.

An embodiment of the disclosure also provides a terminal device, which includes a processor and a memory configured to store a computer program capable of running in the processor. The processor is configured to run the computer program to execute the steps of the RACH method executed by a terminal device.

An embodiment of the disclosure also provides a network device. FIG. 9 shows a composition structure of the network device. The network device 500 includes a sending unit 401.

The sending unit 501 is configured to send a selection parameter of a RACH type, the RACH type selection parameter being used for a terminal device to determine a RACH type.

In the embodiment of the disclosure, the sending unit 501 is further configured to send a first threshold, the first threshold being used, together with a signal strength parameter of a serving cell, for the terminal device to determine the RACH type. The first threshold is carried through a system broadcast message or RRC dedicated signaling.

In the embodiment of the disclosure, the sending unit 501 is further configured to send a second threshold and a third threshold, the second threshold and the third threshold being used, together with a signal strength parameter of a serving cell, for the terminal device to determine the RACH type. The second threshold and the third threshold are carried through a system broadcast message or RRC dedicated signaling.

In the embodiment of the disclosure, the RACH type selection parameter includes a weight parameter of a RACH type or a parameter related to a payload of a RACH type. Descriptions about the RACH type selection parameter are the same as the related descriptions in S301. Elaborations are omitted herein.

An embodiment of the disclosure also provides a network device, which includes a processor and a memory configured to store a computer program capable of running in the processor. The processor is configured to run the computer program to execute the steps of the RACH method executed by a network device.

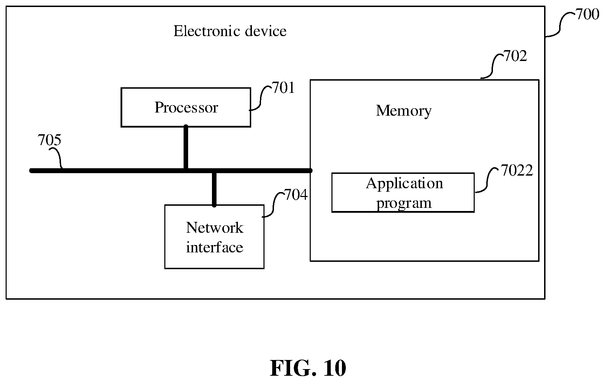

FIG. 10 is a hardware composition structure diagram of an electronic device (a terminal device and a network device) according to an embodiment of the disclosure. The electronic device 700 includes at least one processor 701, a memory 702, and at least one network interface 704. Each component in the electronic device 700 is coupled together through a bus system 705. It can be understood that the bus system 705 is configured to implement connection communication between these components. The bus system 705 includes a data bus, and further includes a power bus, a control bus, and a state signal bus. However, for clear description, various buses in FIG. 10 are marked as the bus system 705.

It can be understood that the memory 702 may be a volatile memory or a nonvolatile memory, or may include both of the volatile and nonvolatile memories. The nonvolatile memory may be a Read-Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, a compact disc or a Compact Disc Read-Only Memory (CD-ROM).The magnetic surface memorymay be a disk memory or a tape memory. The volatile memory may be a Random Access Memory (RAM), and is used as an external high-speed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory 702 described in the embodiment of the disclosure is intended to include, but not limited to, memories of these and any other proper types.

In the embodiment of the disclosure, the memory 702 is configured to store various types of data to support the operation of the electronic device 700. Examples of the data include any computer program, for example, an application program 7022, operated in the electronic device 700. A program implementing the method of the embodiments of the disclosure may be included in the application program 7022.

The method disclosed in the embodiments of the disclosure may be applied to the processor 701 or implemented by the processor 701. The processor 701 may be an integrated circuit chip with a signal processing capability. In an implementation process, each step of the method may be completed by an integrated logic circuit of hardware in the processor 701 or instructions in a software form. The processor 701 may be a universal processor, a Digital Signal Processor (DSP) or another Programmable Logic Device (PLD), a discrete gate or transistor logic device, a discrete hardware component, etc. The processor 701 may implement or execute each method, step and logical block diagram disclosed in the embodiments of the disclosure. The universal processor may be a microprocessor, any conventional processor or the like. The steps of the method disclosed in combination with the embodiments of the disclosure may be directly embodied to be executed and completed by a hardware decoding processor or executed and completed by a combination of hardware and software modules in the decoding processor. The software module may be located in a storage medium, and the storage medium is located in the memory 702. The processor 701 reads information in the memory 702 and completes the steps of the method in combination with hardware.

In an exemplary embodiment, the electronic device 700 may be implemented by one or more Application Specific Integrated Circuits (ASICs), DSPs, PLDs, Complex Programmable Logic Devices (CPLDs), Field Programmable Gate Arrays (FPGAs), universal processors, controllers, Micro Controller Units (MCUs), Microprocessor Units (MPUs), or other electronic components, and is configured to execute the abovementioned method.

An embodiment of the application also provides a storage medium, which is configured to store a computer program.

Optionally, the storage medium may be applied to the terminal device in the embodiments of the application. The computer program enables a computer to execute corresponding flows in each method of the embodiments of the application. For simplicity, elaborations are omitted herein.

Optionally, the storage medium may be applied to the network device in the embodiments of the application. The computer program enables a computer to execute corresponding flows in each method of the embodiments of the application. For simplicity, elaborations are omitted herein.

The disclosure is described with reference to flowcharts and/or block diagrams of the method, device (system) and computer program product according to the embodiments of the disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that a device for realizing a function specified in one flow or multiple flows in the flowcharts and/or one block or multiple blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction device may be generated by the instructions stored in the computer-readable memory, the instruction device realizing the function specified in one flow or multiple flows in the flowcharts and/or one block or multiple blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or multiple flows in the flowcharts and/or one block or multiple blocks in the block diagrams are provided by the instructions executed on the computer or the other programmable data processing device.

The above is only the preferred embodiment of the disclosure and not intended to limit the scope of protection of the disclosure. Any modifications, equivalent replacements, improvements and the like made within the spirit and principle of the disclosure shall fall within the scope of protection of the disclosure.

**Claims**

1. A Random Access Channel (RACH) method, comprising:
determining, by a terminal device, an RACH type based on at least one of the following:
a RACH type selection parameter, a signal strength parameter of a serving cell, or a resource configuration of an Uplink (UL) Bandwidth Part (BWP).

2. The method of claim 1, further comprising:
receiving, by the terminal device, the RACH type selection parameter sent by a network device through a system broadcast message or Radio Resource Control (RRC) dedicated signaling.

3. The method of claim 1 or 2, wherein the determining the RACH type comprises:

under the condition that a type-1 RACH resource is configured in an activated UL BWP, determining, by the terminal device, that the RACH type is type-1 RACH;
under the condition that a type-2 RACH resource is configured in the activated UL BWP, determining, by the terminal device, that the RACH type is type-2 RACH;
under the condition that the type-1 RACH resource and the type-2 RACH resource are configured in the activated UL BWP, determining, by the terminal device, the RACH type based on at least one of the RACH type selection parameter or the signal strength parameter of the serving cell, or randomly determining, by the terminal device, the RACH type; and
under the condition that neither the type-1 RACH resource nor the type-2 RACH resource is configured in the activated UL BWP, determining, by the terminal device, the RACH type based on a resource configuration of an initial BWP.

4. The method of claim 3, wherein the terminal device is in a connected state.

5. The method of any one of claims 1-4, wherein the determining the RACH type comprises:

> under the condition that the signal strength parameter of the serving cell is less than or equal to a first threshold, determining, by the terminal device, that the RACH type is type-2 RACH; and
> under the condition that the signal strength parameter of the serving cell is greater than the first threshold, determining, by the terminal device, the RACH type based on the RACH type selection parameter.

6. The method of claim 5, wherein the first threshold is carried through a system broadcast message or RRC dedicated signaling.

7. The method of any one of claims 1-4, wherein the determining the RACH type comprises:

> under the condition that the signal strength parameter of the serving cell is greater than or equal to a second threshold, determining, by the terminal device, that the RACH type is type-1 RACH;
> under the condition that the signal strength parameter of the serving cell is less than a third threshold, determining, by the terminal device, that the RACH type is type-2 RACH; and
> under the condition that the signal strength parameter of the serving cell is greater than or equal to the third threshold and less than the second threshold, determining, by the terminal device, the RACH type based on the RACH type selection parameter, or randomly determining, by the terminal device, the RACH type.

8. The method of claim 7, wherein the second threshold and the third threshold are carried through the system broadcast message or the RRC dedicated signaling.

9. The method of any one of claims 1-8, wherein the determining the RACH type comprises:

> generating, by the terminal device, a random number;
> under the condition that the random number is less than a first selection parameter, determining, by the terminal device, that the RACH type is type-1 RACH; and
> under the condition that the random number is greater than or equal to the first selection parameter, determining, by the terminal device, that the RACH type is type-2 RACH, wherein
> the first selection parameter is a selection parameter of type-1 RACH.

10. The method of any one of claims 1-8, wherein the determining the RACH type comprises:

> generating, by the terminal device, a random number;
> under the condition that the random number is greater than a second selection parameter, determining, by the terminal device, that the RACH type is type-2 RACH; and
> under the condition that the random number is less than or equal to the second selection parameter, determining, by the terminal device, that the RACH type is type-1 RACH, wherein
> the second selection parameter is a selection parameter of type-2 RACH.

11. The method of any one of claims 1-10, wherein the RACH type selection parameter comprises:
a weight parameter of the RACH type, or a parameter related to a payload of the RACH type.

12. The method of any one of claims 1-11, wherein the signal strength parameter of the serving cell is Reference Signal Receiving Power (RSRP).

13. The method of any one of claims 1-12, further comprising:
executing, by the terminal device, a RACH process based on the determined RACH type.

14. The method of claim 13, wherein under the condition that the terminal device fails to execute the RACH process, the method further comprises:

> re-executing, by the terminal device, the RACH process based on the determined RACH type; or,
> re-determining, by the terminal device, the RACH type, and executing, by the terminal device, the RACH process based on the re-determined RACH type.

15. The method of any one of claims 1-14, wherein the terminal device has a capability of executing type-1 RACH.

**16.** A Random Access Channel (RACH) method, comprising:
sending, by a network device, a RACH type selection parameter, the RACH type selection parameter being used for a terminal device to determine a RACH type.

**17.** The method of claim 16, further comprising:
sending, by the network device, a first threshold, the first threshold being used, together with a signal strength parameter of a serving cell, for the terminal device to determine the RACH type.

**18.** The method of claim 17, wherein the first threshold is carried through a system broadcast message or Radio Resource Control (RRC) dedicated signaling.

**19.** The method of claim 16, further comprising:
sending, by the network device, a second threshold and a third threshold, the second threshold and the third threshold being used, together with a signal strength parameter of a serving cell, for the terminal device to determine the RACH type.

**20.** The method of claim 19, wherein the second threshold and the third threshold are carried through a system broadcast message or RRC dedicated signaling.

**21.** The method of any one of claims 16-20, wherein the RACH type selection parameter is carried through the system broadcast message or the RRC dedicated signaling.

**22.** The method of any one of claims 16-21, wherein the RACH type selection parameter comprises:
a weight parameter of the RACH type, or a parameter related to a payload of the RACH type.

**23.** A terminal device, comprising:
a processing unit, configured to determine a Random Access Channel (RACH) type based on at least one of the following:
a RACH type selection parameter, a signal strength parameter of a serving cell, or a resource configuration of an Uplink (UL) Bandwidth Part (BWP).

**24.** The terminal device of claim 23, further comprising:
a receiving unit, configured to receive the RACH type selection parameter sent by a network device through a system broadcast message or Radio Resource Control (RRC) dedicated signaling.

**25.** The terminal device of claim 23 or 24, wherein the processing unit is configured to:

under the condition that a type-1 RACH resource is configured in an activated UL BWP, determine that the RACH type is type-1 RACH;
under the condition that a type-2 RACH resource is configured in the activated UL BWP, determine that the RACH type is type-2 RACH;
under the condition that the type-1 RACH resource and the type-2 RACH resource are configured in the activated UL BWP, determine the RACH type based on at least one of the RACH type selection parameter or the signal strength parameter of the serving cell, or randomly determine the RACH type; and
under the condition that no type-1 RACH resource and type-2 RACH resource are configured in the activated UL BWP, determine the RACH type based on a resource configuration of an initial BWP.

**26.** The terminal device of claim 25, wherein the terminal device is in a connected state.

**27.** The terminal device of any one of claims 23-26, wherein the processing unit is configured to:

under the condition that the signal strength parameter of the serving cell is less than or equal to a first threshold, determine that the RACH type is type-2 RACH; and
under the condition that the signal strength parameter of the serving cell is greater than the first threshold, determine the RACH type based on the RACH type selection parameter.

**28.** The terminal device of claim 27, wherein the first threshold is carried through a system broadcast message or RRC dedicated signaling.

29. The terminal device of any one of claims 23-26, wherein the processing unit is configured to:

under the condition that the signal strength parameter of the serving cell is greater than or equal to a second threshold, determine that the RACH type is type-1 RACH;
under the condition that the signal strength parameter of the serving cell is less than a third threshold, determine that the RACH type is type-2 RACH; and
under the condition that the signal strength parameter of the serving cell is greater than or equal to the third threshold and less than the second threshold, determine the access type based on the RACH type selection parameter, or randomly determine the RACH type.

30. The terminal device of claim 29, wherein the second threshold and the third threshold are carried through the system broadcast message or the RRC dedicated signaling.

31. The terminal device of any one of claims 23-30, wherein the processing unit is further configured to:

generate a random number;
under the condition that the random number is less than a first selection parameter, determine that the RACH type is type-1 RACH; and
under the condition that the random number is greater than or equal to the first selection parameter, determine that the RACH type is type-2 RACH, wherein
the first selection parameter is a selection parameter of type-1 RACH.

32. The terminal device of any one of claims 23-30, wherein the processing unit is further configured to:

generate a random number;
under the condition that the random number is greater than a second selection parameter, determine that the RACH type is type-2 RACH; and
under the condition that the random number is less than or equal to the second selection parameter, determine that the RACH type is type-1 RACH,
wherein the second selection parameter is a selection parameter of type-2 RACH.

33. The terminal device of any one of claims 23-32, wherein the RACH type selection parameter comprises:
a weight parameter of the RACH type, or a parameter related to a payload of the RACH type.

34. The terminal device of any one of claims 23-33, wherein the signal strength parameter of the serving cell is Reference Signal Receiving Power (RSRP).

35. The terminal device of any one of claims 23-34, wherein the processing unit is further configured to execute a RACH process based on the determined RACH type.

36. The terminal device of claim 35, wherein under the condition that the processing unit fails to execute the RACH process,

the processing unit is further configured to re-execute the RACH process based on the determined RACH type; or,
the processing unit is further configured to re-determine the RACH type and execute the RACH process based on the re-determined RACH type.

37. The terminal device of any one of claims 23-36, wherein the terminal device has a capability of executing type-1 RACH.

38. A network device, comprising:
a sending unit, configured to send a selection parameter of a Random Access Channel (RACH) type, the RACH type selection parameter being used for a terminal device to determine a RACH type.

39. The network device of claim 38, wherein the sending unit is further configured to send a first threshold, the first threshold being used, together with a signal strength parameter of a serving cell, for the terminal device to determine the RACH type.

40. The network device of claim 39, wherein the first threshold is carried through a system broadcast message or Radio Resource Control (RRC) dedicated signaling.

41. The network device of claim 38, wherein the sending unit is further configured to send a second threshold and a third threshold, the second threshold and the third threshold being used, together with a signal strength parameter of a serving cell, for the terminal device to determine the RACH type.

42. The network device of claim 41, wherein the second threshold and the third threshold are carried through a system broadcast message or RRC dedicated signaling.

43. The network device of any one of claims 38-42, wherein the RACH type selection parameter is carried through the system broadcast message or the RRC dedicated signaling.

44. The network device of any one of claims 38-43, wherein the RACH type selection parameter comprises:
a weight parameter of the RACH type, or a parameter related to a payload of the RACH type.

45. A terminal device, comprising a processor and a memory configured to store a computer program capable of running in the processor, wherein
the processor is configured to run the computer program to execute the steps of the Random Access Channel (RACH) method of any one of claims 1-15.

46. A network device, comprising a processor and a memory configured to store a computer program capable of running in the processor, wherein
the processor is configured to run the computer program to execute the steps of the Random Access Channel (RACH) method of any one of claims 16-22.

47. A storage medium, storing an executable program which is executed by a processor to implement the Random Access Channel (RACH) method of any one of claims 1-15.

48. A storage medium, storing an executable program which is executed by a processor to implement the Random Access Channel (RACH) method of any one of claims 16-22.

**FIG. 1**

**FIG. 2**

| E | T | R | R | BI | Oct 1 |

**FIG. 3A**

| E | T | RAPID | Oct 1 |

**FIG. 3B**

| E/T/R/R/BI Subheader | E/T/RAPID Subheader | E/T/RAPID Subheader | MAC RAR |

| MAC subPDU 1 (BI Only) | MAC subPDU 2 (RAPID Only) | MAC subPDU 3 (RAPID and RAR) | MAC subPDU 4 | ⋯ | MAC subPDU n | Padding (opt) |

**FIG. 4**

| Terminal device | | Network device |

S201. Preamble+UE ID → Msg A

S202. Contention resolution ← Msg B

**FIG. 5**

**100**

110

120                                        120

**FIG. 6**

| Terminal device | Network device |

RACH type selection parameter

S301. The terminal device determines a RACH type
based on at least one of a RACH type selection
parameter, a signal strength parameter of a serving
cell, or a resource configuration of a UL BWP

S302. The terminal device executes a RACH
process based on the determined RACH type

**FIG. 7**

Terminal device 400

Processing unit 401

Receiving unit 402

**FIG. 8**

Network device 500

Sending unit 501

**FIG. 9**

**FIG. 10**

## INTERNATIONAL SEARCH REPORT

| International application No. |
|---|
| **PCT/CN2019/082136** |

| A. | CLASSIFICATION OF SUBJECT MATTER |
|---|---|

H04W 74/08(2009.01)i

According to International Patent Classification (IPC) or to both national classification and IPC

| B. | FIELDS SEARCHED |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; CNABS; VEN; CNKI; 3GPP: 第一类随机接入, 第二类随机接入, 第一类型随机接入, 第二类型随机接入, 四步随机接入, 两步随机接入, 4步随机接入, 2步随机接入, 确定, 选择, 参数, first, second, type, kind, 4-step, 2-step, random access channel, RACH, determine, select, parameter

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108282895 A (CHINA ACADEMY OF TELECOMMUNICATIONS TECHNOLOGY) 13 July 2018 (2018-07-13) description, paragraphs [0055]-[0111] | 1-48 |
| X | WO 2018132843 A1 (MOTOROLA MOBILITY LLC) 19 July 2018 (2018-07-19) description, page 15, lines 4-16, and figure 6 | 1-48 |
| X | WO 2018118218 A1 (QUALCOMM INCORPORATED) 28 June 2018 (2018-06-28) description, page 19, line 24 to page 21, line 14 | 1-48 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 December 2019** | **02 January 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/082136**

| Patent document cited in search report | | | Publication date (day/month/year) | Patent family member(s) | | | Publication date (day/month/year) |
|---|---|---|---|---|---|---|---|
| CN | 108282895 | A | 13 July 2018 | WO | 2018127239 | A1 | 12 July 2018 |
| | | | | US | 2019357265 | A1 | 21 November 2019 |
| WO | 2018132843 | A1 | 19 July 2018 | US | 2018205516 | A1 | 19 July 2018 |
| | | | | KR | 20190104541 | A | 10 September 2019 |
| WO | 2018118218 | A1 | 28 June 2018 | CN | 110115092 | A | 09 August 2019 |
| | | | | CA | 3042511 | A1 | 28 June 2018 |
| | | | | EP | 3560268 | A1 | 30 October 2019 |
| | | | | KR | 20190098970 | A | 23 August 2019 |
| | | | | US | 2018184447 | A1 | 28 June 2018 |
| | | | | TW | 201826861 | A | 16 July 2018 |

Form PCT/ISA/210 (patent family annex) (January 2015)